# EUROPEAN PATENT APPLICATION

(11) **EP 3 015 941 A1**
(43) Date of publication of application: **04.05.2016**
(21) Application number: 14461582.0
(22) Date of filing: 27.10.2014
(51) Int. Cl.: G05D 1/08, B64C 37/02, B64C 39/10, B64D 5/00

(54) **A system for controlling carrier with parasite flying units and a method for controlling a carrier with parasite flying units**

(71) Applicant: Patents Factory Ltd. Sp. z o.o., 65-043 Zielona Gora (PL)
(72) Inventor: Paczkowski, Jacek, 65-043 Zielona Gora (PL); Nalewa, Tomasz, 65-043 Zielona Gora (PL); Kramek, Krzysztof, 65-043 Zielona Gora (PL)
(74) Representative: Eupatent.pl

(57) **Abstract**

A method for controlling a carrier (100) with parasite flying units (200), characterized in that the method comprises steps of: at the carrier (100), taking a decision (400) about the flight parameters and/or maneuvers; formulating (401) the intent by the carrier (100); communicating (402) the intent by the carrier (100) to the parasites (200); confronting (403) the intent by the parasites (200) with available data and presenting an action proposal by each parasite (200); selecting (404) at least one parasite (200) to execute the intent depending on the action proposals of the parasites (200); executing (405) the intent by the selected at least one parasite (200).

## Description

### TECHNICAL FIELD

The present invention relates to a system for controlling a carrier with parasite flying units and a method for controlling a carrier with parasite flying units.

### BACKGROUND

There are known flying units of all-wing type. They usually resemble a single wing of an aircraft that comprises its own propelling means. Such flying units have several advantages, the main of which is a relatively low mass. This, in consequence, results in low fuel or energy consumption and low manufacturing costs when compared to classic flying units. The all-wing type units can be in form of UAVs (Unmanned Aerial Vehicles), which further emphasizes these advantages, and also eliminates the risk of death of the pilot.

The PCT application WO2001058756 discloses an aircraft of an "all-wing" type, the flight of which can be controlled by controlling the thrust of its engines. Such steering method can allow for the lower overall mass of the aircraft, as well as less complicated construction.

There is also known a use of all-wing type units as a carrier for other, smaller UAVs with own propelling means and energy sources. In such instance, these small UAVs are called 'parasites' and are connected for example to the lower surface of the carrier, so that they can be easily detached when necessary.

It would be desirable to provide a system for controlling a carrier with parasite flying units and a method for controlling a carrier with parasite flying units that could optimize the usage of fuel or energy and provide redundancy resulting in higher reliability.

### SUMMARY

There is presented a method for controlling a carrier with parasite flying units, the method comprising the steps of: at the carrier, taking a decision about the flight parameters and/or maneuvers; formulating the intent by the carrier; communicating the intent by the carrier to the parasites; confronting the intent by the parasites with available data and presenting an action proposal by each parasite; selecting at least one parasite to execute the intent depending on the action proposals of the parasites; executing the intent by the selected at least one parasite.

Preferably, the confronting comprises checking which parasites are available for executing the intent and comparing the intent with entries of intent database.

Preferably, the intent database comprises commands to be performed by the parasite.

Preferably, the step of selecting is performed at the carrier.

Preferably, the step of selecting is performed at the parasites.

There is also presented a system for controlling a carrier with parasite flying units, the system comprising a carrier controller and at least one parasite controller being configured to: at the carrier controller, to take a decision about the flight parameters and/or maneuvers; formulate the intent by the carrier controller; communicate the intent by the carrier controller to the parasite controller; confronting the intent by the parasite controller with available data and presenting an action proposal by each parasite; select at least one parasite to execute the intent depending on the action proposals of the parasites; execute the intent by the selected at least one parasite.

### BRIEF DESCRIPTION OF FIGURES

These and other objects presented herein are accomplished by providing a system for controlling carrier with parasite flying units and a method for controlling a carrier with parasite flying units. Further details and features of the present invention, its nature and various advantages will become more apparent from the following detailed description of the preferred embodiments shown in a drawing, in which:
Fig. 1 shows an all-wing flying unit in perspective view from above.
Fig. 2 shows an all-wing flying unit in perspective view from below.
Fig. 3 shows an all-wing flying unit in front view with all the parasite flying units.
Fig. 4 shows an all-wing flying unit in front view with one parasite detached.
Fig. 5 shows an all-wing flying unit with one parasite detached in the view from below.
Fig. 6 shows a system according to the invention.

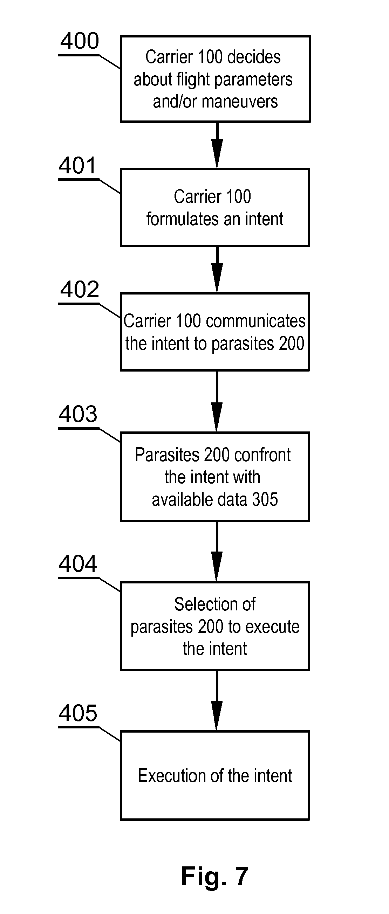

Fig. 7 shows the steps of a method according to the invention.

### DETAILED DESCRIPTION

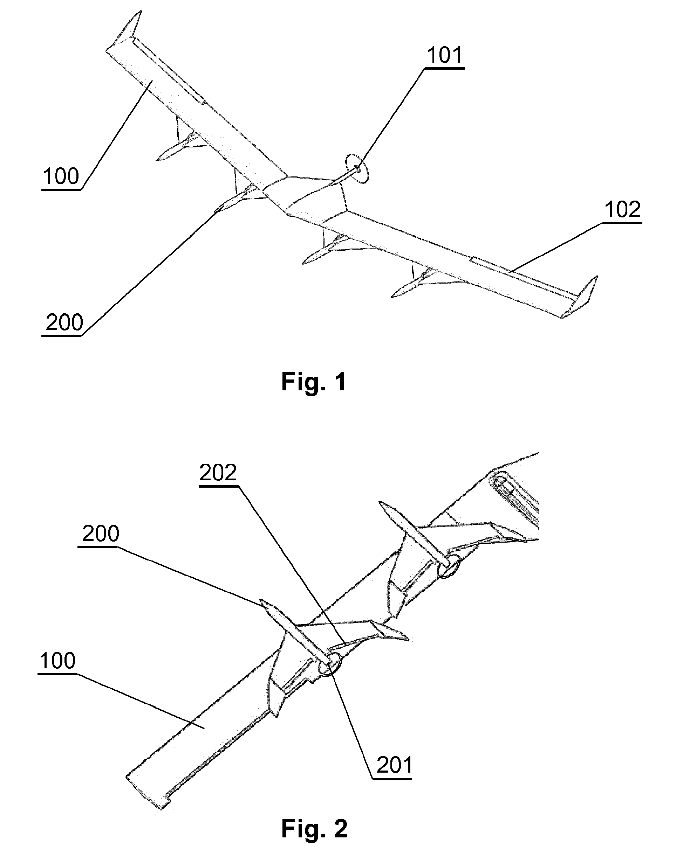

Figs. 1, 2 and 3 show an all-wing flying unit in a perspective view from above, from below and in front view, respectively. The carrier 100 is propelled by an engine 101 located in the center. The parasites 200 (small UAVs) are connected under a wing of the carrier 100, in a substantially symmetric configuration with respect to its longitudinal axis. In this case, there are two parasites 200 on the left side and two parasites 200 on the right side of the carrier 100. Other configurations with different number of parasites 200 are also possible.

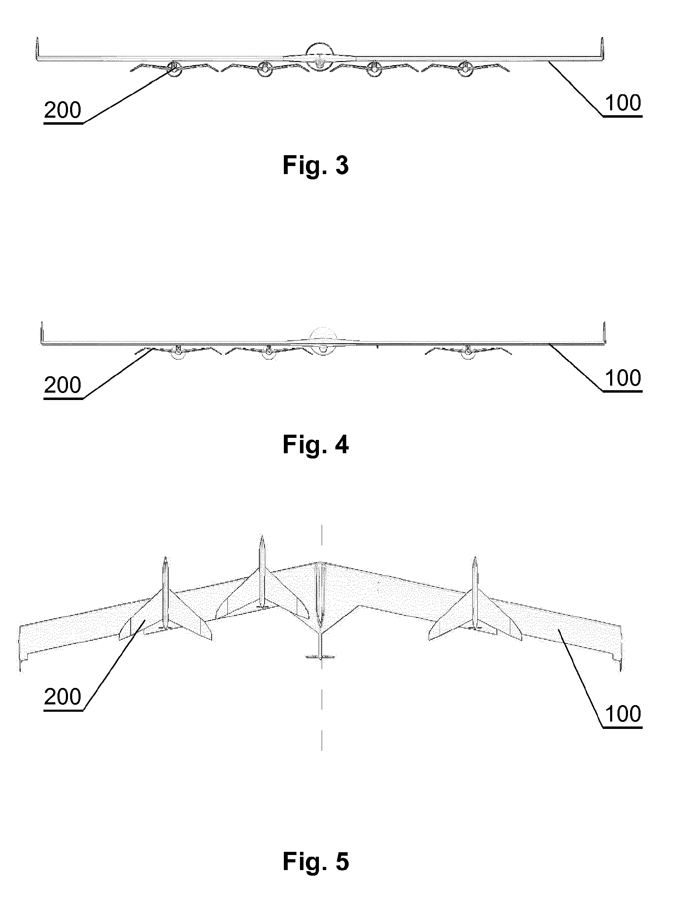

Figs. 4-5 show a carrier 100 wherein one of the parasites 200 has been detached. There are therefore three parasites 200 left, two on the right side and one on the left side. The carrier 100 has its engine 101 and flight control surfaces 102. Similarly, parasites 200 have their engines 201 and flight control surfaces 202

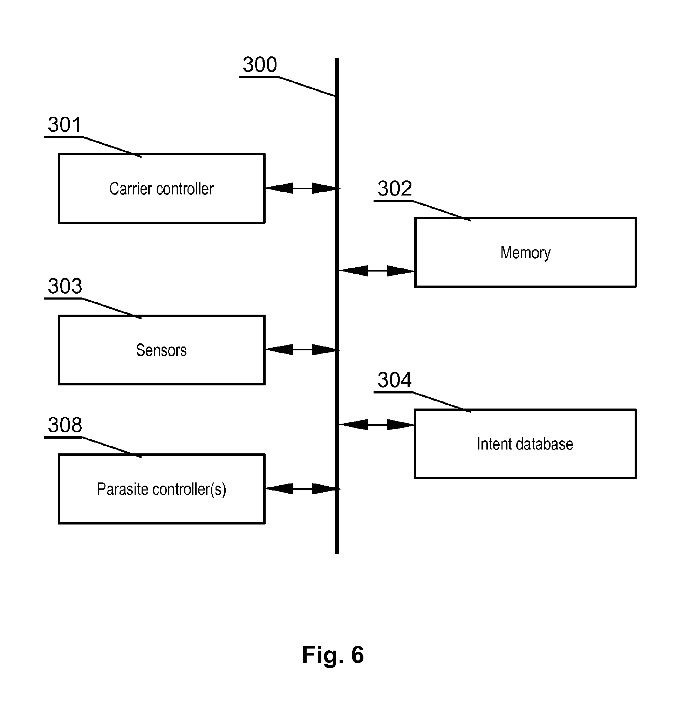

Fig. 6 shows a system for controlling carrier with a parasite flying unit. The system comprises a controller 301. The controller 301 is configured to execute software that allows for controlling carrier with parasite flying unit using steps of the method described herein. The system comprises a data bus 300 for communicating, preferably bi-directionally, all circuits and/or elements of the system, i.a. sensors 303. Further, the system comprises a memory 302 for storing required software for the controller 301 and any temporary data needed for operation of the system. Parasites are equipped with their own controllers 308. It is important that all controllers 301, 308 in the system know the status of its other members (i.e. of the carrier and all connected parasites). The controllers 301, 308 have to exchange the data and consult the controlling procedures.

The carrier 100 and the parasites 200 are preferably connected using a plurality of parallel, bi-directional data buses, in order to provide redundancy, which improves the reliability of the system.

The parasites 200 are connected to the carrier 100 through electric connections so as to allow the carrier to send control signals to the parasites. The controller 301 in the carrier can communicate with parasites, i.e. to send them basic or complex/compound commands. The commands can be sent to either individual parasites or to multiple parasites at once.

For example, the carrier can send, to each parasite separately, basic commands such as:
- set the elevator in a desired position;
- set the rudder in a desired position
- set ailerons in a desired position;
- set trim tabs in a desired position;
- set desired engine speed;
- set desired angle of the propeller blades;
- deploy/retract landing gear;
- deploy/retract head with optical sensors;
- set fuel valves in fuel intake mode;
- set fuel valves in fuel distribution mode;
- switch to charging of accumulators;
- switch to sharing the energy from the main accumulator;
- set a camera in desired position;
- set the zoom of the camera in desired position.

The carrier can also send, for example to each parasite separately, complex commands (intents) such as:
- produce drag of desired value (measured as the force acting on the mounting of the parasite to the pylon of the carrier);
- produce a force acting vertically, of desired value and direction (measured as the force acting on the mounting of the parasite to the pylon of the carrier);
- produce a thrust of desired value (measured as the force acting on the mounting of the parasite to the pylon of the carrier);
- by producing a thrust (or a drag), compensate the yaw motion of the carrier with parasites (this command is to be sent when due to disconnecting one of the parasites there occurs a asymmetry) and subsequently set the flight control surfaces and/or engines in a position so as to maintain balanced configuration (i.e. flight in straight line, when the flight control surfaces of the carrier are in a neutral position);
- increase/decrease the lift;
- draw set amount of fuel;
- draw set amount of electric energy.

The carrier can also send, for example to multiple parasites at the same time, complex commands (intents) such as:
- using the elevator, flaps and ailerons execute set bank or roll maneuver, whilst not exceeding maximal permissible forces acting on the mounting to the pylon;
- using the elevator, flaps and ailerons execute climbing/descent/pitch maneuver, whilst not exceeding maximal permissible forces acting on the mounting to the pylon;
- by producing a thrust (or a drag) bring the carrier onto its set course and maintain it;
- by producing a thrust set a desired flight speed, whilst not exceeding maximal permissible forces acting on the mounting to the pylon.

The carrier 100 decides 400 about the flight parameters and maneuvers, e.g. about trajectory and speed of flight. In order to communicate this decision to parasites 200, the carrier 100 formulates 401 the intent. The intent is, for example, a complex/compound command as described above, which is understandable to the parasites 200. After formulating 401 the intent, the carrier 100 communicates 402 the intent to the parasites 200. The parasites 200 confront 403 the intent with data available to them and send back an action proposal. Next, having regard to the action proposals received from the parasites, the parasite(s) 200 to execute the intent are selected by the carrier in step 404, and consequently, the selected parasite(s) are ordered to execute the intent by performing the proposed actions in step 405.

The data utilized to confront the intent, i.e. to make decision which particular action to take and what parameters should such action have, can be in different forms. For example, the system can comprise an intent database 304. In such database, selected, semi-predefined complex/compound commands/intents can be stored. They can comprise a selection of basic commands, combined to achieve more complex effect, but without specific parameters. Such parameters are chosen at the moment of executing the intent, based on live data from sensors. Furthermore, the data can comprise status of parasites 200 currently connected to the carrier 100: what parasites are comprised in the system, where are they mounted with respect to the main axis of the carrier 100 and whether they are fully or partly functional. Parasites 200 can measure, use and send (e.g. to carrier 100) following data concerning: localization (from GPS, inertial navigation system), orientation (acceleration sensors, gyroscope sensors, geomagnetic sensors), pressure, air temperature, position of the flight control surfaces (elevator, rudder, ailerons, flaps, trim tabs), position of all the mechanisms (landing gear, retractable heads with optical sensors etc.), fuel tank level (or energy in main accumulators), energy level in accumulators powering the electronics of parasites), the forces acting on the mounting of parasites to the carrier (from tensometric sensors), vision data (from on-board cameras), acoustic data (from on-board microphones).

In order to predict a reaction of the carrier-parasites system to the action of the parasite (movement of a flight control surface or turning on an engine), this parasite has to have data about its position with respect to the carrier. This can be achieved, for example, by obtaining the information about position of the mounting of the parasite with respect to the carrier, e.g. its main axis, or obtaining data about position of the pylon, onto which it is mounted: distance X of the axis of the pylon to the axis of symmetry of the carrier, distance Y of longitudinal axis from the chord of the wing's profile in place of the pylon. On the other hand, the parasite has to provide back information such as: angle of the propeller with respect to the angle of attack of the carrier's wing and angles of the engines position with respect to the longitudinal axis of the parasite (single-engine models and drones often have the axis of the engine tilted with respect to the longitudinal axis of the fuselage).

For example, for an intent concerning making a turn of 90°, parasites under the left wing will decrease their lift, while parasites under right wing will increase their lift. This will cause roll of the carrier to the left and consequently, to turn left. As the differences between calculated course and real course decrease, the positions of the flight control surfaces will also gradually return to their neutral positions.

In case of intents concerning climbing or descending maneuvers, flight control surfaces or engines of the parasites acting symmetrically in pairs can be used as well. If the carrier is to lower its altitude, the distance of the axis of the parasite with respect to the chord of the wing's profile of the carrier is taken into account. Then it is enough for the parasite to produce drag by displacing its flight control surfaces. The produced force and its arm (i.e. distance between the place of imparting this force and the chord of the carrier's wing) will cause lowering of the nose of the carrier, that is its descending. In order to increase the altitude, it would be useful to use engines of the parasites, so that the produced force in connection with its arm will cause the nose of the carrier to elevate, therefore the carrier will come into climbing maneuver.

The carrier can formulate an intent concerning support of the carrier's take-off by the parasites. In such a case, the optimal engine thrust is set at the parasites, while also setting flight control surfaces of the parasites to produce maximal lift force. All this actions are performed while taking into account permissible strain which can be imparted to the mountings of the parasites to the carrier, as well as other constructional restrictions. Moreover, the engines and flight control surfaces of the parasites can be used to execute maneuvers during take-off.

If during a take-off there is a side wind acting on the carrier, it can try to compensate it using its rudder (which is not optimal at lower speed). It can also send an intent to the parasites on the leeward side to increase their thrust so that the system can return to its set course.

The parasites are involved in the controlling of the whole system. Based on the intentions and information sent from the carrier, they develop their own control procedures so as to produce the effect desired by the carrier. Because there can be many parasites connected to the carrier, not necessarily in symmetric configuration, the parasites have to choose between themselves which has to perform which action, so that the intent can be executed and the effect can be achieved.

For example, the carrier may send to the parasites a definition of the task to be performed, and in response each parasite may reply by indicating the method in which the task will be realized. Based on the replies, the carrier selects the parasite which is to perform the task. The selection may be based e.g. on the minimum consumption of fuel involved to execute the task, the maximum speed that can be achieved etc.

For example, one parasite may propose to increase aerodynamic resistance at its side to achieve speed reduction. Another parasite may propose to increase the drag at its side, which results in increase of fuel consumption. In another example, parasites at the same side of the carrier may propose to change the position of the rudders, but the parasite which is further away from the axis of symmetry of the carrier needs to change the angle in a smaller extent - this results in a smaller drag and is more effective.

The carrier selects according to the needs. Alternatively, the selection criteria may be communicated to the parasites and the proposals from individual parasites may be communicated to other parasites - in this way, the parasites may decide themselves which one of them made the best proposal and that one may perform the action, while other parasites may refrain from action. The decisions may be also communicated to other parasites and to the carrier.

The parasites on the opposite sides of the carrier can work in pairs to provide an aerodynamically optimal control. The value of thrust or aerodynamic force to be used is calculated based on the difference between set flight course and current, real course of the carrier. The smaller the difference, the smaller force or thrust has to be produced.

Typically, to save fuel/energy, the parasites generating the smallest drag are chosen to execute the control command. To perform a bank or roll maneuver, the optimal choice would be to select the parasites positioned farthest from the carrier's axis of symmetry, as the arm of the force will then be the longest, therefore the force itself can be smaller. This means that the flight control surface, e.g. the rudder or elevator, will be less displaced and cause lower drag.

For example, if there are four identical parasites connected to the carrier, two on each side, in distances 1 and 3 meters from the axis of the carrier, and the intent about yaw maneuver will be sent, then the parasites will decide which ones are to perform any action that would lead to achieve this effect. In this case, the parasites at the distance of 1 m from the carrier's axis will signal that they will not perform any action, and parasites distanced 3 meters from the carrier's axis will perform the action, while deciding between each other which is to perform which action and with what parameters.

If the configuration is asymmetrical, then the parasite which does not have its corresponding on the other side of the carrier should compensate the non-uniform drag distribution it causes by producing a thrust using its engine. Such parasite will not take part in effecting any intents, because there is no parasite to act in cooperation with him on the other side of the carrier.

In case of failure of one on the parasites, its corresponding parasite from the other side of the carrier has to compensate for this fact in order to minimize its influence on the flight's course.

In case of failure of the carrier's engine or any of its flight control surfaces, the parasites are able to compensate for it as well, for example using predefined intents stored in the intent database 304.

All the executed actions, which have an influence on the flight, should be adequate to the desired effect. Therefore, the regulators having influence on the actionable elements (flight control surfaces, engines) should be properly, optimally configured. This can be achieved by adaptive control. The adaptive regulator "learns" the reactions of the controlled object to different set parameters and adjusts its own parameters and outputted values to produce optimal functioning. Such solution allows for quick adaptation of newly connected parasite to the system. For safety reasons, the parasite should start from minimal displacements of flight control surface and minimal dynamic parameters of its regulator, so as not to pose a danger to the system.

The above described invention provides for redundancy of essential systems, which in consequence leads to high reliability and flexibility of the system.

While the system and method presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein. Accordingly, the scope of protection is not limited to the preferred embodiments described in the specification, but is only limited by the claims that follow.

## Claims

1. A method for controlling a carrier (100) with parasite flying units (200), **characterized in that** the method comprises steps of:
- at the carrier (100), taking a decision (400) about the flight parameters and/or maneuvers;
- formulating (401) the intent by the carrier (100);
- communicating (402) the intent by the carrier (100) to the parasites (200);
- confronting (403) the intent by the parasites (200) with available data and presenting an action proposal by each parasite (200);
- selecting (404) at least one parasite (200) to execute the intent depending on the action proposals of the parasites (200);
- executing (405) the intent by the selected at least one parasite (200).

2. The method according to claim 1, wherein the confronting (403) comprises checking (410) which parasites (200) are available for executing (404) the intent and comparing (411) the intent with entries of intent database (304).

3. The method according to claim 2, wherein the intent database (304) comprises commands to be performed by the parasite.

4. The method according to claim 1, wherein the step of selecting (404) is performed at the carrier (100).

5. The method according to claim 1, wherein the step of selecting (404) is performed at the parasites (200).

6. A system for controlling a carrier (100) with parasite flying units (200), the system comprising a carrier controller (301) and at least one parasite controller (308) being configured to:
- at the carrier controller (301), to take a decision (400) about the flight parameters and/or maneuvers;
- formulate (401) the intent by the carrier controller (301);
- communicate (402) the intent by the carrier controller (301) to the parasite controller (308);
- confronting (403) the intent by the parasite controller (308) with available data and presenting an action proposal by each parasite (200);
- select (404) at least one parasite (200) to execute the intent depending on the action proposals of the parasites (200);
- execute (405) the intent by the selected at least one parasite (200).

## Amended claims

### Amended claims in accordance with Rule 137(2) EPC.

1. A method for controlling a carrier (100) with parasite flying units (200), the method comprising taking a decision (400). at the carrier (100), about the flight parameters and/or maneuvers;
the method **characterized in that** it comprises the steps of:
- formulating (401) the intent by the carrier (100);
- communicating (402) the intent by the carrier (100) to the parasites (200);
- confronting (403) the intent by the parasites (200) with available data and presenting an action proposal by each parasite (200);
- selecting (404) at least one parasite (200) to execute the intent depending on the action proposals of the parasites (200);
- executing (405) the intent by the selected at least one parasite (200).

2. The method according to claim 1, wherein the confronting (403) comprises checking (410) which parasites (200) are available for executing (404) the intent and comparing (411) the intent with entries of intent database (304).

3. The method according to claim 2, wherein the intent database (304) comprises commands to be performed by the parasite.

4. The method according to claim 1, wherein the step of selecting (404) is performed at the carrier (100).

5. The method according to claim 1, wherein the step of selecting (404) is performed at the parasites (200).

6. A system for controlling a carrier (100) with parasite flying units (200), the system comprising a carrier controller (301) and at least one parasite controller (308), **characterized in that** the system is configured to:
- at the carrier controller (301), to take a decision (400) about the flight parameters and/or maneuvers;
- formulate (401) the intent by the carrier controller (301);
- communicate (402) the intent by the carrier controller (301) to the parasite controller (308);
- confronting (403) the intent by the parasite controller (308) with available data and presenting an action proposal by each parasite (200);
- select (404) at least one parasite (200) to execute the intent depending on the action proposals of the parasites (200);
- execute (405) the intent by the selected at least one parasite (200).
